# EUROPÄISCHE PATENTSCHRIFT

(11) **EP 0 589 282 B1**
(45) Veröffentlichungstag und Bekanntmachung des Hinweises auf die Patenterteilung: **22.05.1996**
(21) Anmeldenummer: 93114373.9
(22) Anmeldetag: 08.09.1993
(51) Int. Cl.: B27B 27/08, B27G 5/02, B23Q 3/00

(54) **Tischsäge mit winkelverstellbarem Anschlag**
Table sawing machine with an angularly adjustable stop
Machine à scier à table avec un arrêt réglable en inclinaison

(30) Priorität: 17.09.1992 DE 4231110
(43) Veröffentlichungstag der Anmeldung: 30.03.1994
(73) Patentinhaber: ROBERT BOSCH GMBH, 70442 Stuttgart (DE)
(72) Erfinder: Wünsch, Steffen, Dipl.-Ing., D-71088 Holzgerlingen (DE)

(56) Entgegenhaltungen:
- DE-A- 1 628 864
- DE-A- 3 521 729
- DE-A- 3 921 680
- DE-U- 9 207 811

## Beschreibung

### Stand der Technik

Die Erfindung geht aus von einer Tischsäge der im Oberbegriff des Anspruchs 1 definierten Gattung.

Die bei solchen Tischsägen vorgesehenen sog. Parallel- und Winkelanschläge dienen zum Ablängen von Werkstücken und gleichzeitigem Gehrungsschneiden mit Gehrungswinkeln bis mindestens 45°.

Bei einer bekannten Tischsäge der eingangs genannten Art, wie sie beispielsweise in der DE 39 21 680 A1 beschrieben ist, ist der winkelverstellbare Anschlag in einem Drehpunkt am Schiebeschlitten drehbar gehalten und kann mittels einer dort sichtbar angebrachten Winkelskala soweit gedreht werden, daß der gewünschte Gehrungswinkel eingestellt ist. Beim Drehen des Anschlags bewegt sich das dem Sägeblatt zugekehrte Ende des Anschlags auf einer Kreisbahn und vergrößert mit zunehmendem Einstellwinkel den Abstand zum Sägeblatt. Ein am Anschlag angelegtes Werkstück muß somit nach Drehen des Anschlags soweit in Richtung Sägeblatt am Anschlag längsverschoben werden, bis die gewünschte Trennstelle am Werkstück in der Schnittebene des Sägeblattes liegt und das Werkstück unter dem gewünschten Gehrungswinkel geschnitten werden kann. Durch diese notwendige Axialverschiebung des Werkstücks am Anschlag muß beim Gehrungssägen von gleichgroßen Werkstücken daher zuvor jeweils die Trennstelle am Werkstück abgemessen und angezeichnet werden. Ein üblicherweise an der Anlegekante des Werkstücks am Anschlag vorhandener Längenmaßstab bietet keine Hilfe, da das Werkstück über dessen Nullmarke hinaus verschoben werden muß. Der Längenmaßstab ist ausschließlich beim Ablängen von Werkstücken von Nutzen.

### Vorteile der Erfindung

Die erfindungsgemäße Tischsäge mit den kennzeichnenden Merkmalen des Anspruchs 1 hat den Vorteil, daß durch die erfindungsgemäß ausgestalteten beiden Lagerstellen des Anschlags dieser bei einer Winkeleinstellung eine kombinierte Dreh- und Längsschiebe-Bewegung derart ausführt, daß sein dem Sägeblatt zugekehrtes Stirnende sich parallel zum Sägeblatt verschiebt. Die Nullmarke eines am Anschlag angeordneten Längenmaßstabs liegt damit - nach einmaliger Einjustierung - bei jeder Winkeleinstellung des Anschlags an der Schnittkante des Sägeblatts. Damit können mittels des Maßstabs in jeder Winkelstellung gleich große Werkstücke problemlos abgeschnitten werden. Ein gesondertes Nachmessen des Werkstückes und Anzeichnen von Schnittlinien am Werkstück entfällt.

Durch die in den weiteren Ansprüchen aufgeführten Maßnahmen sind vorteilhafte Weiterbildungen und Verbesserungen der im Anspruch 1 angegebenen Tischsäge möglich.

Gemäß einer bevorzugten Ausführungsform der Erfindung ist die als Stift-Schlitz-Führung ausgebildete erste Lagerstelle am Schiebeschlitten nahe dessen dem Sägeblatt zugekehrter Seite und die zweite als Kulissenführung ausgebildete Lagerstelle mit Abstand davon am Schiebeschlitten nahe dessen von dem Sägeblatt wegweisender Seite angeordnet. Durch diese konstruktive Gestaltung wird eine kurze Baulänge des Schiebeschlittens in Schieberichtung erzielt.

Die Festsetzung des Anschlags in der gewünschten Winkelstellung erfolgt gemäß einer vorteilhaften Ausführungsform der Erfindung durch manuell betätigbare Klemmittel, die an beiden Lagerstellen des Anschlags vorgesehen sind.

Gemäß einer bevorzugten Ausführungsform der Erfindung weisen die Klemmittel jeweils eine Schaftschraube, deren Schraubenkopf sich auf der Unterseite des Schiebeschlittens abstützt und deren Schraubenschaft den Anschlag durchdringt, eine oberhalb des Anschlags auf dem Gewindeschaft der Schaftschraube aufgeschraubte Mutter und eine das Schraubenschaftende übergreifende Klemmhülse auf, die die Mutter drehfest aufnimmt und sich mit ihrem Stirnende auf dem Anschlag aufsetzt. In der ersten Lagerstelle ist dabei der Schraubenkopf am Schiebeschlitten festgelegt und der Schraubenschaft bildet mit einem gewindelosen Schaftabschnitt den Bolzen der Stift-Schlitz-Führung. In der anderen Lagerstelle ist der Schraubenschaft am Anschlag unverschieblich festgelegt und auf der Unterseite des Schraubenkopfes ein im Durchmesser reduzierter, über den Schraubenschaft radial vorstehender Kopfabschnitt ausgebildet, der den in der Kulissenbahn geführten Kulissenstein der Kulissenführung bildet. Mit der Klemmhülse ist jeweils ein Drehgriff einstückig verbunden, so daß der Anschlag in der gewünschten Einstellposition schnell und problemlos gelöst und festgesetzt werden kann.

### Zeichnung

Die Erfindung ist anhand eines in der Zeichnung dargestellten Ausführungsbeispiels in der nachfolgenden Beschreibung näher erläutert. Es zeigen:
- Fig. 1: eine Draufsicht einer Tischkreissäge mit Tischplatte, Schiebeschlitten und Anschlag, schematisiert dargestellt,
- Fig. 2 und 3: jeweils einen Schnitt durch Schiebeschlitten und Anschlag in den beiden Lagerstellen des Anschlags auf dem Schiebeschlitten bei einer konstruktiven Ausführungsform.

### Beschreibung des Ausführungsbeispiels

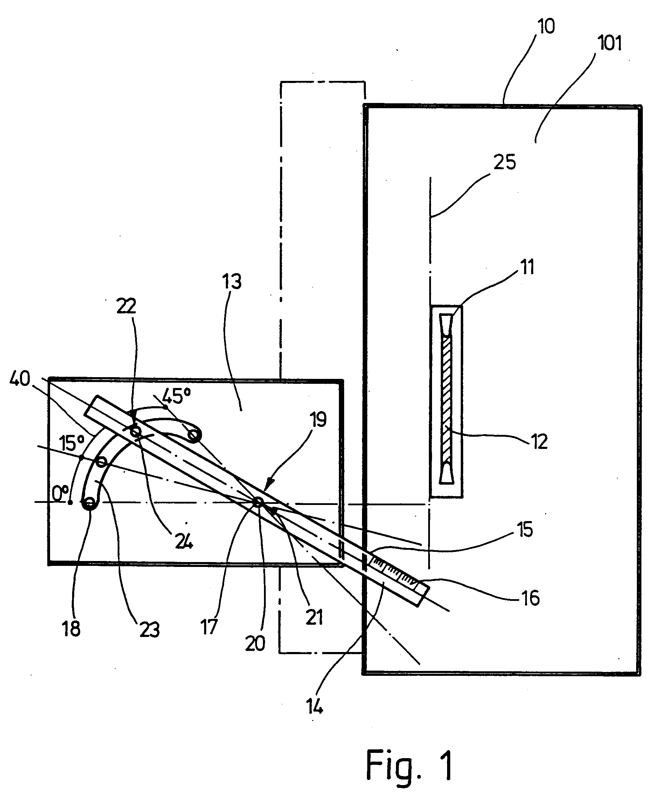

Die in Fig. 1 in Draufsicht schematisch skizzierte Tischkreissäge weist eine Tischplatte 10 mit einer Aussparung 11 auf, durch welche ein Kreissägeblatt 12 mit seinem oberen Teilumfang hindurchragt und über die Oberfläche 101 der Tischplatte 10 vorsteht. An der Tischplatte 10 ist ein Schlitten 13 in Sägerichtung parallel zum Sägeblatt 12 verschiebbar geführt. Auf dem Schlitten 13 ist ein winkelverstellbarer leistenartiger Anschlag 14 gehalten, der eine in Sägerichtung weisende Anlegkante 15 zum Anlegen des zu sägenden Werkstückes aufweist. Wie angedeutet ist, trägt der Anschlag 14 längs seiner Werkstückanlegekante 15 eine Längenmaßskala 16, deren Nullmarke mit dem dem Sägeblatt 12 zugekehrten Ende der Werkstückanlegekante 15 zusammenfällt.

Der Anschlag 14 ist über zwei Lagerstellen 17 und 18 mit dem Schlitten 13 verbunden. Die erste Lagerstelle 17 ist dabei nahe der dem Sägeblatt 12 zugekehrten Seite des Schlittens 13 angeordnet und als Stift-Schlitz-Führung 19 ausgebildet. Der Stift wird dabei von einem am Schlitten 13 befestigten und von diesem rechtwinklig abstehenden Bolzen 20 und der Schlitz von einem in Achsrichtung des Anschlags 14 sich erstreckenden Langloch 21 gebildet, das den Bolzen 20 umschließt und dessen kleinere Lochabmessung geringfügig größer ist als der Außendurchmesser des Bolzens 20.

Die zweite Lagerstelle 18 ist im Abstand von der ersten Lagerstelle 17 nahe der vom Sägeblatt 12 abgekehrten Seite des Schlittens 13 angeordnet. Sie ist als Kulissenführung 22 ausgebildet, wobei die bogenförmige Kulissenbahn 23 im Schlitten 13 und der in der Kulissenbahn 23 gleitende Kulissenstein 24 am Anschlag 14 ausgebildet ist. Die Längsachse des Anschlags 14 geht dabei mittig durch Kulissenstein 24 und Bolzen 20 hindurch. Die Kulissenbahn 23 ist so geformt, daß bei Winkelverstellung des Anschlags 14 dessen Werkstückanlegekante 15 mit ihrem dem Sägeblatt 12 zugekehrten Ende sich längs einer zum Sägeblatt 12 parallelen Geraden bewegt, die in Fig. 1 strichpunktiert mit 25 angedeutet ist. In einer als Grund- oder Nullwinkelstellung definierten Anschlaglage des Anschlags 14 legt dabei die durch Kulissenstein 24 und Kulissenführung 25 hindurchgehende Achse des Anschlags 14 rechtwinklig zum Sägeblatt 12 und der Kulissenstein 24 liegt an dem einen Ende der Kulissenbahn 23 an. Längs der Kulissenbahn 23 ist auf dem Schlitten 13 eine Skalierung 40 mit Winkelgradeinteilung angebracht, mittels welcher der gewünschte Gehrungswinkel eingestellt werden kann. Bei Verschwenken des Anschlags 14 um 45° liegt der Kulissenstein 24 an dem anderen Ende der Kulissenbahn 23 an.

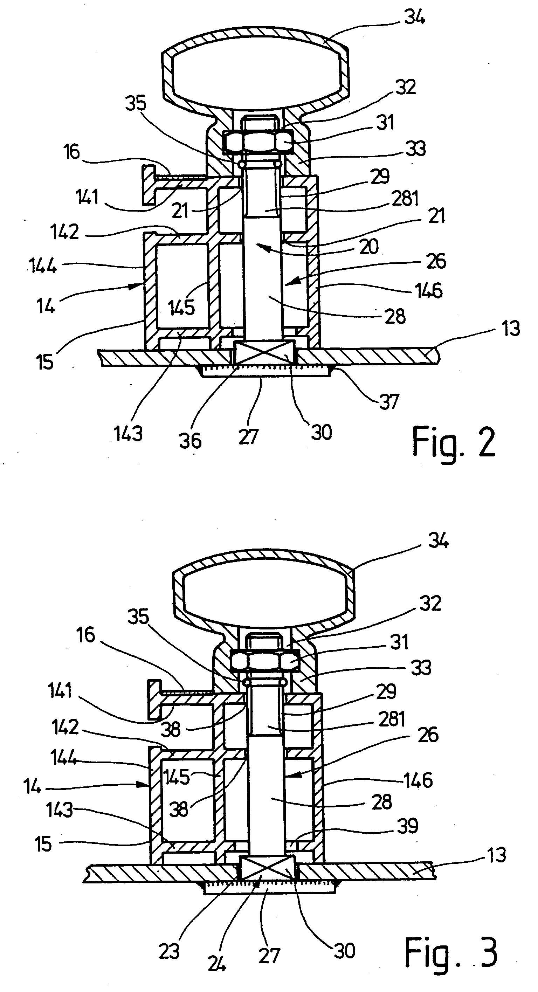

Zur Festlegung des Anschlags 14 in der jeweils eingestellten Winkelstellung sind in jeder der beiden Lagerstellen 17,18 Klemmittel vorgesehen, mittels welcher der Anschlag 14 auf dem Schlitten 13 festgespannt werden kann. Die Klemmittel bilden dabei gleichzeitig Teile der Stift-Schlitz-Führung 19 bzw. der Kulissenführung 22. Wie aus der Schnittdarstellung in Fig. 2 und 3 hervorgeht, ist in jeder Lagerstelle 17,18 eine Kopfschraube 26 mit einem Schraubenkopf 27 und einem Schraubenschaft 28 vorgesehen, der auf seinem Endabschnitt 281 ein Außengewinde 29 trägt. Zwischen Schraubenkopf 27 und Schraubenschaft 28 ist ein Vierkantabschnitt 30 ausgebildet, der über den Schraubenschaft 28 vorsteht. Nach Durchtritt des Schraubenschaftes durch den als Aluminiumprofil ausgebildeten Anschlag 14 ist auf das Außengewinde 29 des Schraubenschaftes 28 eine Mutter 31 aufgeschraubt, die in einer Ausnehmung 32 einer den Endabschnitt 281 des Schraubenschaftes 28 übergreifenden Hülse 33 drehfest aufgenommen ist. Die Hülse 33 ist einstückig mit einem Drehgriff 34 verbunden. Um ein Herausfallen der Kopfschraube 26 aus dem Anschlag 14 zu verhindern, ist oberhalb des Anschlags 14 im Endabschnitt 281 des Schraubenschafts ein Sprengring 35 eingelegt.

In Fig. 2 ist ein Schnitt durch Schlitten 13, Anschlag 14 und Klemmittel in der Lagerstelle 17 dargestellt. Die Kopfschraube 26 ist von der Unterseite des Schlittens 13 her durch ein Vierkantloch 36 im Schlitten 13 gesteckt, wobei der Vierkantabschnitt 30 formschlüssig in dem Vierkantloch 36 einliegt. Der Schraubenschaft 28 ist durch das Langloch 21 im Anschlag 14 hindurchgesteckt und mittels des Sprengringes 35 gegen Herausfallen gesichert. Nunmehr wird die Hülse 33 mit drehfest einliegender Mutter 31 auf das Außengewinde 29 aufgeschraubt, bis die Stirnseite der Hülse 33 sich an die Oberfläche des Anschlags 14 andrückt. Nunmehr kann durch weiteres Drehen des Drehgriffes 34 der Anschlag 14 kraftschlüssig am Schlitten 13 festgespannt werden. Da der Anschlag 14 als Aluminium-Hohlkastenprofil ausgebildet ist und insgesamt drei parallel zum Schlitten 13 sich erstreckende Tragwände 141 - 143 aufweist, die über drei Vertikalwände 145 - 146 verbunden sind, müssen in jeder Tragwand 141 - 143 deckungsgleiche Langlöcher 21 vorgesehen werden. Wie ersichtlich, bildet der Schraubenschaft 28 den Bolzen 20 der Stift-Schlitz-Führung 19 in der Lagestelle 17.

Anstelle des Vierkantabschnittes 30 und des Sprengrings 35 kann zur Festlegung der Kopfschraube 26 in der Lagerstelle 17 der Schraubenkopf 27 an der Unterseite des Schlittens 13 verschweißt werden, wie dies in Fig. 3 durch die Schweißnaht 37 angedeutet ist.

In Fig. 3 ist ein gleicher Schnitt wie in Fig. 2, aber in der Lagerstelle 18 dargestellt. Hier wird die Kopfschraube 26 mit ihrem Schraubenschaft 28 durch die Kulissenbahn 23 im Schlitten 13 hindurchgesteckt, wobei der Vierkantabschnitt 30 den Kulissenstein 24 der Kulissenführung 22 bildet. Zur besseren Führung des Kulissensteins 24 in der Kulissenbahn 23 ist der Vierkantabschnitt 30 seitlich abgerundet oder als Rundscheibe ausgebildet. Der Schraubenschaft 28 ist durch eine Bohrung 38, deren Innendurchmesser geringfügig größer ist als der Außendurchmesser des Schraubenschaftes 28, hindurchgesteckt und oberhalb der Anschlagoberfläche mit dem Sprengring 35 versehen. Danach wird in gleicher Weise die Hülse 33 mit Mutter 31 auf den Schraubenschaft 28 aufgeschraubt, bis die Stirnseite der Hülse 33 den Anschlag 14 gegen den Schlitten 13 festklemmt. Bei der beschriebenen Hohlkastenprofilausbildung des Anschlags 14 genügt es, die Bohrung 38 in einer der parallelen Tragwände 141 - 143 vorzusehen, beispielsweise in der mittleren Tragwand 142.

In den übrigen Tragwänden 141 und 143 können durchmessergrößere Bohrungen 39 vorgesehen werden.

Die Wirkungsweise des winkelverstellbaren Anschlags 14 ist wie folgt:
In der Grund- oder Nullwinkelstellung ist der Anschlag 14 senkrecht zum Sägeblatt 12 ausgerichtet. In dieser Stellung kann das Werkstück abgelängt werden, also senkrecht zur seiner Längsachse in vorbestimmten Längen abgeschnitten werden. Wird beim Sägeschnitt ein Gehrungswinkel von z.B. 30° gewünscht, so sind die beiden Drehgriffe 34 in den beiden Lagerstellen 17,18 zu lösen, bis der Anschlag 14 auf dem Schlitten 13 bewegt werden kann. Dann wird der Anschlag 14 am Drehgriff 34 der hinteren Lagerstelle 18 so weit in der Kulissenbahn 23 verschoben, bis seine Längsachse mit der Markierung "30°" der Winkelskalierung 40 fluchtet. Diese Stellung des Anschlags 14 ist in Fig. 1 dargestellt. Bei der Verschiebung des Anschlags 14 gleitet der von dem abgerundeten Vierkantabschnitt 30 der Kopfschraube 26 gebildete Kulissenstein 24 in der Kulissenbahn 23 entlang, wodurch der Anschlag 14 um den vom Schraubenschaft 28 der Kopfschraube 26 in der Lagerstelle 17 gebildeten Bolzen 20 geschwenkt und gleichzeitig um eine bestimmte Wegstrecke in Längsrichtung im Langloch 21 verschoben wird. Durch die Bemessung der Kulissenbahn 23 erfolgt die axiale Verschiebung des Anschlags 14 so, daß das Ende der Werkstückanlegkante 15 des Anschlags 14 auf der in Fig. 1 strichpunktiert eingezeichneten Geraden 25 entlanggleitet. Über den gesamten Verschwenkweg des Anschlags 14 bleibt damit der Abstand dieses Anlegkantenendes vom Sägeblatt 12 konstant. Ist die gewünschte Stellung erreicht, so werden die beiden Drehgriffe 34 in den beiden Lagerstellen 17,18 soweit angedreht, bis der Anschlag 24 kraftschlüssig am Schlitten 13 festliegt.

## Patentansprüche

1. Tischsäge mit einem über eine Tischplatte (10) emporragenden Sägeblatt (12), insbesondere Kreissägeblatt, einem parallel zum Sägeblatt (12) verschiebbaren Schlitten (13) und einem auf dem Schlitten (13) gehaltenen Anschlag (14) mit Anlegkante (15) zum Anlegen eines zu sägenden Werkstücks, der relativ zum Sägeblatt (12) winkelverstellbar und in jeder Winkelstellung am Schlitten (13) festsetzbar ist, dadurch gekennzeichnet, daß der Anschlag (14) über zwei Lagerstellen (17,18) mit dem Schlitten (13) verbunden ist, von denen die erste Lagerstelle (17) als Stift-Schlitz-Führung (19) und die zweite Lagerstelle (18) als Kulissenführung (22) mit bogenförmiger Kulissenbahn (23) und darin geführtem Kulissenstein (24) ausgebildet ist, deren Kulissenbahn (23) so geformt ist, daß bei Winkelverstellung des Anschlags (14) dessen Werkstückanlegekante (15) mit ihrem dem Sägeblatt (12) zugekehrten Ende sich längs einer zum Sägeblatt (12) parallelen Geraden (25) bewegt.

2. Tischsäge nach Anspruch 1, dadurch gekennzeichnet, daß die erste Lagerstelle (17) am Schlitten (13) nahe dessen dem Sägeblatt (12) zugekehrter Seite und die zweite Lagerstelle (18) mit Abstand davon nahe dessen vom Sägeblatt (12) wegweisender Seite angeordnet ist.

3. Tischsäge nach Anspruch 2 oder 3, dadurch gekennzeichnet, daß die Stift-Schlitz-Führung (19) einen am Schlitten (13) befestigten, von diesem rechtwinklig abstehenden Bolzen (20) und ein im Anschlag (14) eingebrachtes, den Bolzen (20) umschließendes axiales Langloch (21) aufweist, dessen kleinere Lochabmessung geringfügig größer ist als der Außendurchmesser des Bolzens (20).

4. Tischsäge nach einem der Ansprüche 1 - 3, dadurch gekennzeichnet, daß die Kulissenbahn (23) im Schlitten (13) ausgebildet und der Kulissenstein (24) am Anschlag (14) gehalten ist.

5. Tischsäge nach Anspruch 4, dadurch gekennzeichnet, daß die Längsachse des Anschlags (14) mittig durch den Kulissenstein (24) und den Bolzen (20) hindurchgeht und die Kulissenbahn (23) relativ zum Bolzen (20) so angeordnet ist, daß in einer als Grund- oder Nullwinkelstellung definierten Anschlaglage die Längsachse des Anschlags (14) rechtwinklig zum Sägeblatt (12) verläuft.

6. Tischsäge nach Anspruch 5, dadurch gekennzeichnet, daß längs der Kurvenbahn (23) eine Skalierung (40) zur Winkeleinstellung des Anschlags (14) angebracht ist.

7. Tischsäge nach einem der Ansprüche 1 - 6, dadurch gekennzeichnet, daß der Anschlag (14) längs seiner Werkstückanlegkante (15) eine Längenmaßskala (16) trägt.

8. Tischsäge nach einem der Ansprüche 1 - 7, dadurch gekennzeichnet, daß manuell betätigbare Klemmittel zum Festsetzen des Anschlags (14) an beiden Lagerstellen (17,18) des Anschlags (14) vorgesehen sind.

9. Tischsäge nach Anspruch 8, dadurch gekennzeichnet, daß die Klemmittel jeweils eine Kopfschraube (26), deren Schraubenkopf (27) sich auf der Unterseite des Schlittens (13) abstützt und deren Schraubenschaft (28) den Anschlag (14) durchdringt, eine oberhalb des Anschlags (14) auf dem Außengewinde (29) des Schraubenschafts (28) aufgeschraubte Mutter (31) und eine das Schraubenschaftende übergreifende Klemmhülse (33) aufweisen, die die Mutter (31) drehfest aufnimmt und sich mit ihrem Stirnende auf dem Anschlag (14) aufsetzt.

10. Tischsäge nach Anspruch 3 und 9, dadurch gekennzeichnet, daß der Schraubenschaft (28) der Kopfschraube (26) durch eine im Durchmesser wenig größere Ausnehmung (36) im Schlitten (13) und, den Bolzen (20) der Stift-Schlitz-Führung (19) bildend, durch das Langloch (21) im Anschlag (14) hindurchgesteckt ist.

11. Tischsäge nach Anspruch 4 und 9, dadurch gekennzeichnet, daß der Schraubenschaft (28), den Kulissenstein (24) der Kulissenführung (22) bildend, durch die Kulissenbahn (23) im Schlitten (13) und durch eine im Durchmesser wenig größere Bohrung (38) im Anschlag (14) hindurchgesteckt ist.

12. Tischsäge nach Anspruch 10 oder 11, dadurch gekennzeichnet, daß die Kopfschraube (26) undrehbar am Schlitten (13) bzw. im Anschlag (14) festgelegt ist.

13. Tischsäge nach einem der Ansprüche 9 - 11, dadurch gekennzeichnet, daß mit der Klemmhülse (33) ein Drehgriff (34) einstückig verbunden ist.

14. Tischsäge nach einem der Ansprüche 1 - 13, dadurch gekennzeichnet, daß der Anschlag (14) als Aluminium-Hohlkastenprofil ausgebildet ist.

## Claims

1. Bench saw with a saw blade (12) which protrudes above a table plate (10), in particular a circular saw blade, with a slide (13) which can be displaced parallel to the saw blade (12), and with a stop (14) which is held on the slide (13) and has a contact edge (15) against which a workpiece to be sawn is placed, the said stop being adjustable in angle relative to the saw blade (12) and fixable on the slide (13) in each angular position, characterized in that the stop (14) is connected to the slide (13) by way of two bearing points (17, 18), of which the first bearing point (17) is designed as a pin-slot guide (19) and the second bearing point (18) is designed as a slotted-link guide (22) with an arcuate slotted-link track (23) and a slider (24) which is guided therein, the slotted-link track (23) of which guide is shaped in such a way that, during the angular adjustment of the stop (14), that end of the workpiece contact edge (15) which is nearest to the saw blade (12) moves along a straight line (25) parallel to the saw blade (12).

2. Bench saw according to Claim 1, characterized in that the first bearing point (17) is arranged on the slide (13) close to its side facing the saw blade (12), and the second bearing point (18) is arranged at a distance therefrom close to the side of the slide facing away from the saw blade (12).

3. Bench saw according to Claim 2 or 3, characterized in that the pin-slot guide (19) has a pin (20) which is attached to the slide (13) and projects at right angles from the latter, and has an axial elongated hole (21) which is made in the stop (14), surrounds the pin (20), and the minor dimension of which is slightly larger than the outside diameter of the pin (20).

4. Bench saw according to one of Claims 1 - 3, characterized in that the slotted-link track (23) is formed in the slide (13) and the slider (24) is held on the stop (14).

5. Bench saw according to Claim 4, characterized in that the longitudinal axis of the stop (14) passes centrally through the slider (24) and the pin (20), and the slotted-link track (23) is arranged in such a way relative to the pin (20) that, in a position of the stop defined as a starting or zero-angle position, the longitudinal axis of the stop (14) runs at right angles to the saw blade (12).

6. Bench saw according to Claim 5, characterized in that a scale (40) for the angular setting of the stop (14) is applied along the cam track (23).

7. Bench saw according to one of Claims 1 - 6, characterized in that the stop (14) bears a length scale (16) along its workpiece contact edge (15).

8. Bench saw according to one of Claims 1 - 7, characterized in that manually actuable clamping means for fixing the stop (14) are provided at both bearing points (17, 18) of the stop (14).

9. Bench saw according to Claim 8, characterized in that the clamping means each have a headed bolt (26), the bolt head (27) of which is supported on the underside of the slide (13) and the bolt shank (28) of which passes through the stop (14), a nut (31) which is screwed onto the external thread (29) of the bolt shank (28) above the stop (14), and a clamping sleeve (33) which fits over the end of the bolt shank, accommodates the nut (31) in a manner fixed against rotation, and the front end of which comes to rest on the stop (14).

10. Bench saw according to Claims 3 and 9, characterized in that the bolt shank (28) of the headed bolt (26) is passed through an aperture (36) of slightly larger diameter in the slide (13) and through the elongated hole (21) in the stop (14), thereby forming the pin (20) of the pin-slot guide (19).

11. Bench saw according to Claims 4 and 9, characterized in that the bolt shank (28) is passed through the slotted-link track (23) in the slide (13), thereby forming the slider (24) of the slotted-link guide (22), and through a hole (38) of slightly larger diameter in the stop (14).

12. Bench saw according to Claim 10 or 11, characterized in that the headed bolt (26) is fixed in a nonrotatable manner on the slide (13) and in the stop (14).

13. Bench saw according to one of Claims 9 - 11, characterized in that a turning handle (34) is connected integrally to the clamping sleeve (33).

14. Bench saw according to one of Claims 1 - 13, characterized in that the stop (14) is designed as an aluminium box section.

## Revendications

1. Scie d'établi comporte une lame de scie (12) en saillie d'un plateau de scie (10), notamment une lame de scie circulaire, comprenant un chariot (13) coulissant parallèlement à la lame de scie (12) et une butée (14) portée par le chariot (13) et ayant une arête d'appui (15) pour appuyer une pièce à scier, cette butée étant réglable angulairement par rapport à la lame de scie (12) et pouvant se bloquer sur le chariot (13) dans chaque position angulaire, caractérisée en ce que la butée (14) est reliée au chariot (13) par deux paliers (17, 18) dont le premier palier (17) est un moyen de guidage à broche et fente (19) et le second palier (18) est un guidage à coulisse (22) avec un chemin de coulisse (23) en forme d'arc, dans lequel est guidé un coulisseau (24) dont la trajectoire (23) est formée pour que lorsque l'on règle l'angle de la butée (14), son arête de pièce (15) avec son extrémité située du côté de la lame de scie (12) se déplace le long d'une droite (25) parallèle à la lame de scie (12).

2. Scie d'établi selon la revendication 1, caractérisée en ce que le premier palier (17) sur le chariot (13) situé du côté proche de la lame de scie (12) et le second palier (18) est prévu à distance du précédent, à proximité de son côté non situé du côté de la lame de scie (12).

3. Scie d'établi selon la revendication 2, caractérisée en ce que le moyen de guidage par ergot et fente (19) comprend un goujon (20) fixé au chariot (13) et qui est perpendiculairement en saillie par rapport au chariot, et un trou oblong (21), prévu dans la butée (14) entoure axialement le goujon (20), la petite dimension du trou étant légèrement supérieure au diamètre extérieur du goujon (20).

4. Scie d'établi selon l'une des revendications 1 à 3, caractérisée en ce que le chemin à coulisse (23) est réalisé dans le chariot (13) et le coulisseau (24) est porté par la butée (14).

5. Scie d'établi selon la revendication 4, caractérisée en ce que l'axe longitudinal de la butée (14) traverse au centre le coulisseau (24) et le goujon (20) et le chemin à coulisse (23) est prévu par rapport au goujon (20) pour que dans une position de butée définie comme position de base ou comme position d'angle zéro, l'axe longitudinal de la butée (14) est perpendiculaire à la lame de scie (12).

6. Scie d'établi selon la revendication 5, caractérisée par une graduation (40) le long du chemin courbe (23) pour le réglage angulaire de la butée (14).

7. Scie d'établi selon l'une des revendications 1 à 6, caractérisée en ce que la butée (14) porte une échelle de longueur (16) le long de son arête d'appui de pièce (15).

8. Scie d'établi selon l'une des revendications 1 à 7, caractérisée par des moyens de serrage manuels pour bloquer la butée (14) au niveau des deux paliers (17, 18) de la butée (14).

9. Scie d'établi selon la revendication 8, caractérisée par des moyens de serrage comprenant chaque fois une vis à tête (26) dont la tête (27) s'appuie contre la face inférieure du chariot (13) et dont le corps de vis (28) traverse la butée (14) et un écrou (31) vissé au-dessus de la butée (14) sur le filetage extérieur (29) du corps de vis (28) ainsi qu'un manchon de serrage (33) engagé sur l'extrémité du corps de vis et qui reçoit l'écrou (31) de manière solidaire en rotation et dont l'extrémité frontale s'appuie sur la butée (14).

10. Scie d'établi selon la revendication 3 ou 9, caractérisée en ce que le corps (28) de la vis à tête (26) est engagé dans une cavité (36) du chariot (13) de diamètre légèrement supérieur, et forme le goujon (20) du moyen de guidage par broche et fente (19), à travers le trou oblong (21) de la butée (14).

11. Scie d'établi selon les revendications 4 et 9, caractérisée en ce que le corps de vis (28) qui forme le coulisseau (24) du guide à coulisse (22) est engagé dans le chemin à coulisse (23) du chariot (13) et dans un perçage (38) de la butée (14), dont le diamètre est légèrement plus grand.

12. Scie d'établi selon la revendication 10 ou 11, caractérisée en ce que la vis à tête (26) est fixée solidairement en rotation au chariot (13) ou à la butée (14).

13. Scie d'établi selon l'une des revendications 9 à 11, caractérisée en ce qu'une poignée (34) de rotation fait corps avec le manchon de serrage (33).

14. Scie d'établi selon l'une des revendications 1 à 13, caractérisée en ce que la butée (14) est un profilé en caisson creux en aluminium.
